# EUROPEAN PATENT APPLICATION

(11) **EP 4 799 953 A1**
(43) Date of publication of application: **02.09.2026**
(21) Application number: 25161138.0
(22) Date of filing: 28.02.2025
(51) Int. Cl.: B65G 1/04

(54) **DOOR ASSEMBLY**

(71) Applicant: AutoStore Technology AS, 5578 Nedre Vats (NO)
(72) Inventor: AUSTRHEIM, Trond, 5578 Nedre Vats (NO); FJELDHEIM, Ivar, 5578 Nedre Vats (NO); KLUNGLAND, Kjell Tore, 5578 Nedre Vats (NO); LARSEN, Brian, 5578 Nedre Vats (NO)
(74) Representative: Kilburn & Strode LLP

(57) **Abstract**

The disclosure relates a door assembly for controlling passage of a vehicle between a first area and a second area of an automated storage and retrieval system, the first area having a first rail system and the second area having a second rail system. The door assembly comprises: a first door; a second door; and an intermediate space for accommodating the vehicle. The intermediate space comprises a connecting rail system configured to interface at a first end with the first rail system and at a second end with the second rail system. The intermediate space is situated between the first door and the second door. The first and second door are independently moveable between respective closed and open positions.

## Description

### TECHNICAL FIELD

The disclosure relates to a door assembly. More particularly, it relates to a door assembly, and a method, for controlling passage of a vehicle between a first area and a second area of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within he warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

During operation of the automated storage and retrieval system, robotic container-handling vehicles (robots) may require maintenance and repair. In order to receive maintenance, the robots typically travel to a service area outside of the main storage grid, where servicing personnel can provide servicing, repairs and maintenance. In some cases, it may be necessary to retrieve a robot from the grid and return it to the service area for repair with the use of a separate robotic or manned service vehicle. To meet safety requirements, the service area may be required to be separate from the grid so that operating robots are away from, and not at risk of colliding with, robots operating on the grid, and to minimise risk of injury to human operators. Typically, a service area is arranged at a periphery of the storage grid. To allow movement of robots and service vehicles between the grid and service area, an access point at the periphery of the grid is required. The access point typically includes a moveable barrier that separates the grid and the service area when the grid is in operation. The barrier may be temporarily moved to allow passage of robots between the service area and the grid.

Conventional barriers used to regulate movement of vehicles between the grid and service area include a single sliding door or shutter. However, such conventional systems pose safety risks to servicing personnel since the door/shutter is at risk of being left open or jamming open when the robots are operating on the grid. This potentially allows human operators to enter the operating grid unhindered, posing a safety risk to the operators and a risk to the operation of the automated storage and retrieval system as a whole.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a door assembly according to an embodiment of the present disclosure;
Fig. 6A shows a top view of the door assembly of Fig. 5 arranged between a first area and a second area of the automated storage retrieval system when the grid is in operation;
Fig. 6B shows an alternative top view of the door assembly of Fig. 5 arranged between a first area and a second area of the automated storage retrieval system when the grid is in operation;
Fig. 6C shows an alternative top view of the door assembly of Fig. 5 arranged between a first area and a second area of the automated storage retrieval system when the grid is in operation;
Fig. 6D shows a top view of the door assembly of Fig. 5 arranged between a first area and a second area of the automated storage retrieval system when the grid is not in operation;
Fig. 7 shows a flow diagram of a method for controlling the passage of a vehicle through the door assembly when the grid is in operation; and
Fig. 8 shows a flow diagram of a method for controlling the passage of a vehicle through the door assembly when the grid is not in operation.

### DETAILED DESCRIPTION

In overview, the disclosure relates to a door assembly for controlling passage of a vehicle between a first and a second area of an automated retrieval system, such as between a storage grid and a service area arranged at the periphery of the storage grid, whereby the first area has a first rail system and the second area has a second rail system. The door assembly has a first door, a second door, and an intermediate space for accommodating the vehicle situated between the first door and the second door. The first and second door may be arranged on opposite sides of the intermediate space, although this is not essential. For instance, the doors may instead be arranged on adjacent sides of the intermediate space. The intermediate space has a connecting rail system configured to interface with the first rail system and the second rail system. In particular, the connecting rail system is configured so that it is able to interface, at a first end, with the first rail system, and interface, at a second end, with the second rail system. Interfacing may generally comprise abutment between the rail systems and/or mechanical coupling of the rail systems. The first and second doors of the door assembly are independently moveable between respective closed and open positions, meaning that at least one of the first and second door can be in a closed position at all times to prevent a vehicle or personnel from travelling freely (i.e. without stopping) between the first area and the second area. In this way, the disclosed door assembly provides an additional level of control over passage between different areas of an automated storage and retrieval system. In some embodiments, and under certain requirements, such as when any robots have ceased operation, the both of the first and second doors may opened to allow free (i.e. uninhibited, without stopping) passage between the first area and the second area for vehicles, such as servicing vehicles.

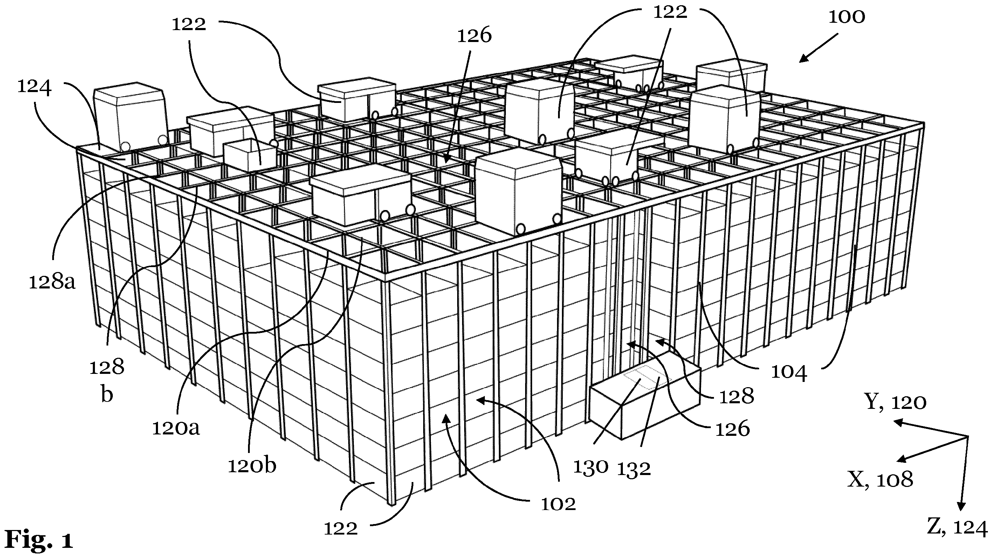

The first area may be a service area for robotic container-handling vehicles (hereafter referred to as robots). The second area may be a grid, such as a grid and rail system described below in relation to Fig. 1. The first and second areas may each have respective rail systems that are configured so that they are able to interface with the connecting rail system of the door assembly. When the door assembly is in situ, i.e., arranged between the first and second areas so that the connecting rail system is interfaced with the first and second rail systems, vehicles can travel between the first area and second area via the connecting rail system. The vehicle may include robots and/or a service vehicle. For example, a robot may travel from the first area (e.g. a service area) to the second area (e.g. a grid) when the robot requires servicing or maintenance. In another example, the robot may malfunction while operating on the grid and a service vehicle may be required to retrieve the robot from operation and transport it to the service area for repair. According to the present disclosure, the door assembly may be arranged in between the first and second area to control passage of vehicles over the connecting rail system between the first and second areas. The intermediate space of the door assembly is sized such that a robot or a service vehicle can be fully accommodated by the intermediate space, and the doors are independently moveable between open and closed positions to control the passage of vehicles therethrough in a safe and controlled manner.

In operation, a vehicle travels into the intermediate space of the door assembly (e.g. from the first area) before travelling out of the intermediate space (e.g. into the second area). In between a time that the vehicle travels into, and out of, the intermediate space, the first door of the door assembly moves from an open position to a closed position before the second door of the door assembly moves from a closed position to an open position. As such, during transit of the vehicle between the two areas, there may always at least one barrier (i.e., the first or the second door) preventing direct passage between the first and second area. That is, the door assembly is configured to prevent direct (i.e. uninhibited) passage of the vehicle between the first area and the second area at all times during grid operation. In all positions of the door assembly during grid operation, at least one of: the path of travel between the first area and the intermediate space; and the path of travel between the second area and the intermediate space, may be obstructed by at least one of the first and/or second door. As described above, this means that at any time, the door assembly prevents a vehicle from freely travelling between the first area and second area via the connecting rail system. In this way, the door assembly acts as a safety provision to prevent a malfunctioning robot from travelling directly from a grid area to a service area (where human service operators may reside), which could otherwise potentially cause harm to those human operators, or otherwise damage the robots or other equipment located in the service area. Additionally, this prevents human operators from gaining access to the grid while it is in operation.

When the grid is not in operation, for example during grid maintenance, there may be no robots operating on the grid and thus a safety barrier between the grid and the service area may not be required. In this case (that is, when the grid is not in operation), both the first and second door of the door assembly may be allowed to remain in an open position. This allows a vehicle (such as a service vehicle) to freely travel between the first area and the second area through the door assembly. In this way, the door assembly facilitates efficient passage of a vehicle between the first and second area when the grid is not in operation. As a result, downtime for grid maintenance can be reduced.

In other words, the independent movement of the first door and the second door of the door assembly allows for control of passage of a vehicle between the first and second area to be adapted for the status of the grid. That is, whether robots are operating on the grid or not. When the grid is in operation, the door assembly is configured to prevent direct passage of the vehicle. Thus risk of injury to human operators and damage to equipment is reduced. When the grid is not in operation, the door assembly is configured to allow direct passage of the vehicle. Thus, ease of travel between areas is improved and grid downtime may be reduced.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

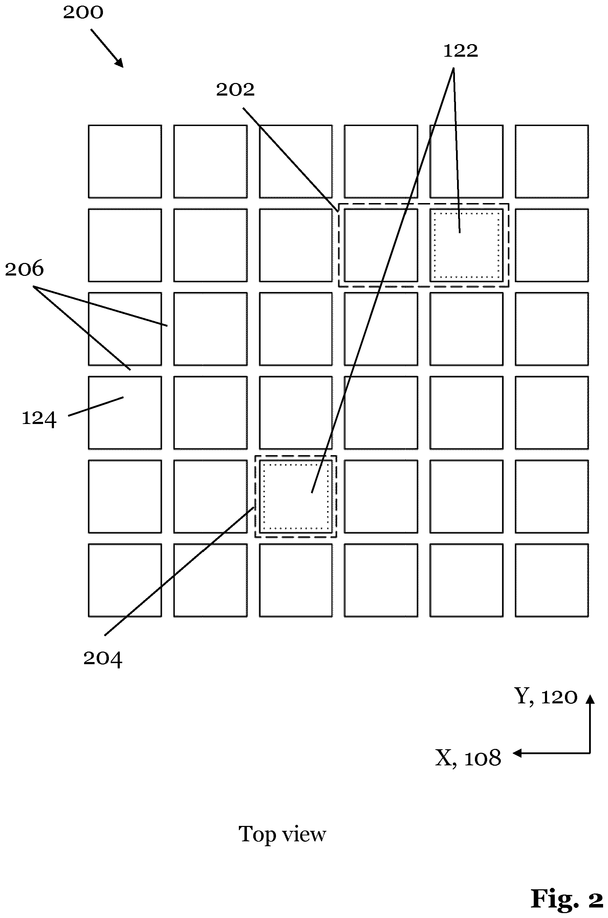

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

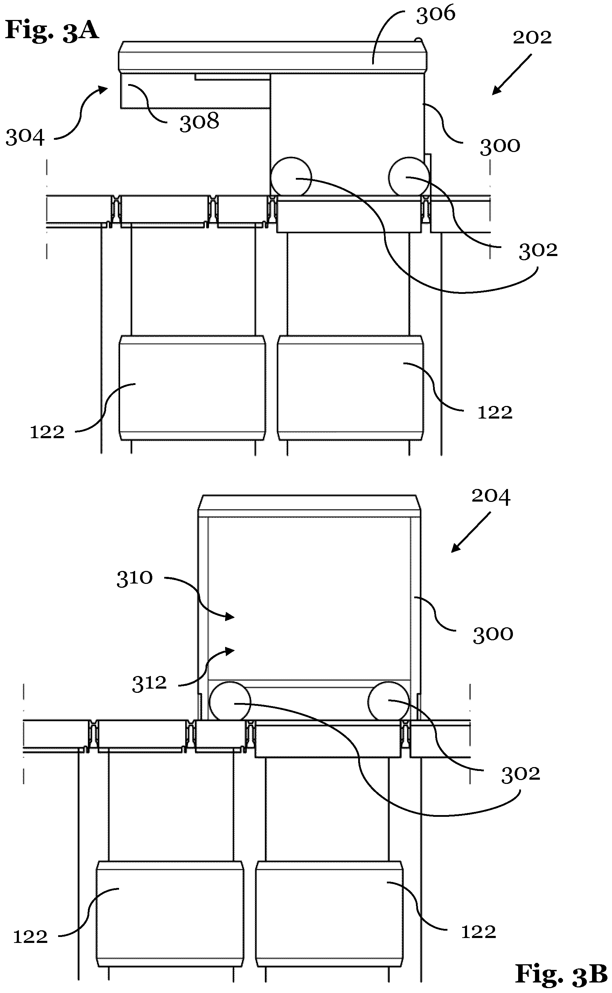

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

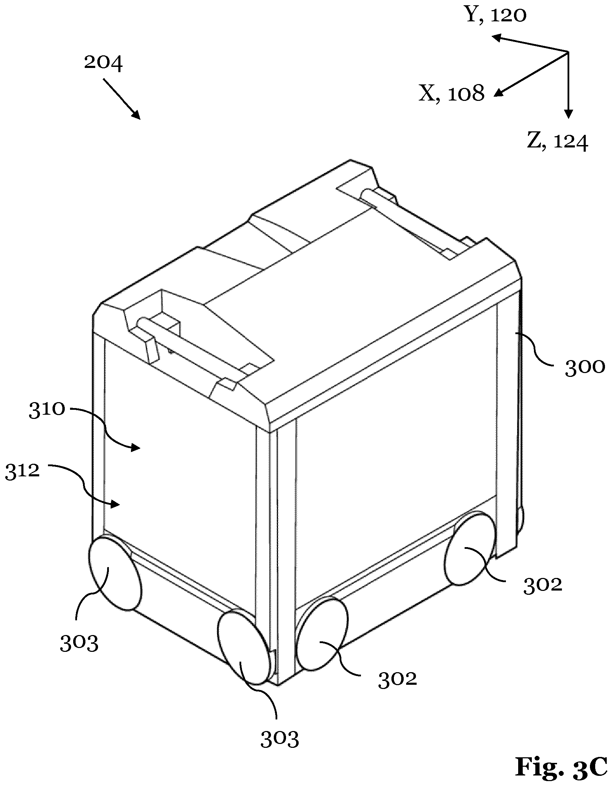

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

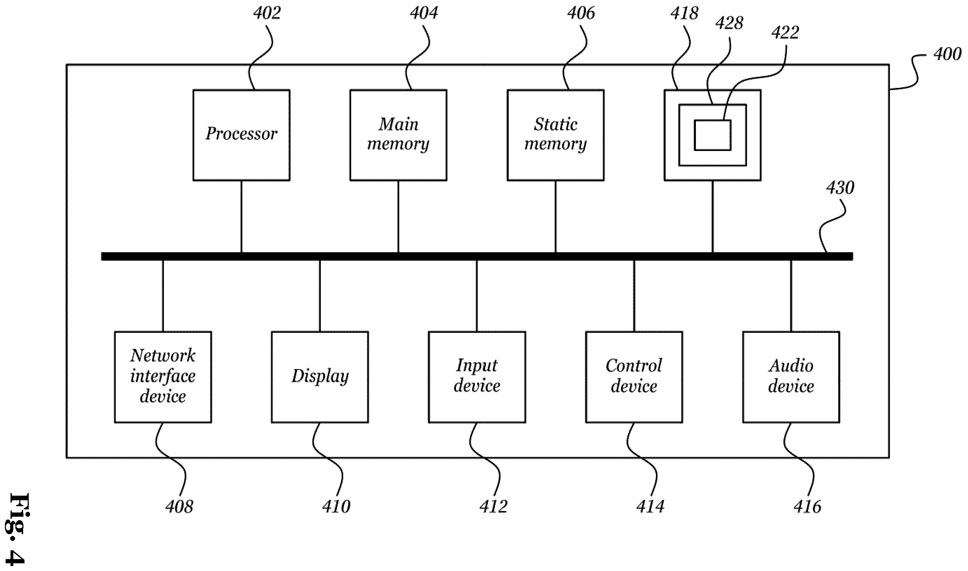

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Robotic vehicle servicing area

In addition to the grid 100, an automated storage and retrieval system may additionally comprise a separate service area for servicing robots that operate on the grid 100. The service area may be appended to one or more sides of the grid 100, such that vehicles can travel across the rail system 116 of the grid 100 to the service area. In more detail, the service area may be located on a mezzanine that is substantially at the same level as the rail system 116 on top of the grid 100. The service area may have its own rail system, which is connected to the rail system 116 of the grid 100 by a connecting rail system such that vehicles can travel from the grid to the service area.

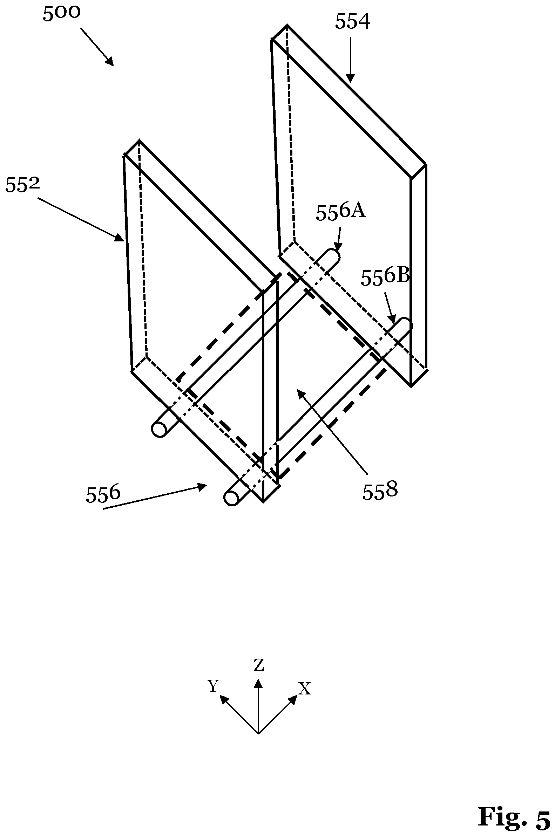

The service area may be accessible by human operators that carry out servicing, maintenance, repair, or other tasks, on the robots. Once the robots have been serviced/repaired/are ready to perform their intended function, they may return to the grid 100 via a connecting rail system that connects the rail system 116 with the rail system of the service area. To prevent access to the grid by the human operators, or more generally to prevent unwanted access to the grid, passage between the grid area and the service area may be controlled by a door assembly as described herein. The door assembly is designed such that during grid operation, direct access from the service area to the grid is prevented. The door assembly is designed such that, when the grid is not in operation, direct access to the grid is possible. Embodiments of door assembly are described in more detail below with reference to Figs. 5, 6A, 6B, 6C, 6D, 7, and 8.

### Door assembly structure

Referring to Fig. 5, a door assembly 500 according to an embodiment of the present disclose is shown in a perspective view. The door assembly 500 comprises a first door 552, a second door 554, and an intermediate space 558. The intermediate space 558 is situated between the first door 552 and the second door 554 such that the first door 552 and the second door 554 are arranged on opposite sides of the intermediate space 558.

The first door 552 and the second door 554 are configured to be independently moveable between respective open and closed positions. The first and second door 552, 554 are configured such that, when either door is in a closed position, passage of a vehicle therethrough is prevented. When the first and/or second door 552, 554 are in an open position, passage of a vehicle through a resultant opening in the door assembly 500 is possible. In some examples, either or both of the first and second door 552, 554 may slide horizontally between an open position and a closed position. In another example, either or both of the first and second door 552, 554 may slide vertically between an open position and a closed position. In another example, either or both of the first and second door 552, 554 may each have a pivot on one side such that either or both of the first and second door 552, 554 can rotate about their respective pivots between an open position and a closed position. The pivot may be positioned such that the first or second door 552, 554 rotate about an axis substantially aligned with the vertical (i.e. the Z axis) or such that the first or second door 552, 554 rotate about an axis substantially aligned with the Y axis (as shown in Fig. 5). In another example, either or both of the first and second door 552, 554 may comprise two sections each configured to rotate about respective pivots. In general, both the first and second door may move in any suitable fashion and under the action of any suitable driving mechanism apparent to the skilled person in order to cause the doors to move between a closed position in which passage therethrough is prevented, and an open position in which passage therethrough is permitted. In general, the mechanisms for opening and closing each doors may be the same or different.

The first and second doors 552, 554 may each be made of metal. For example, aluminium or stainless steel. Alternatively, the first and second doors 552, 554 may each be made of a hard plastic. In some embodiments,, the first and second doors 552, 554 may comprise a window formed from transparent material that allows human operator controlling a manned service vehicle travelling through the door assembly 500 to see into or out of the intermediate space 558 when the first and second door 552, 554 are in a closed position. For example, Perspex or impact-resistant glass, or any other suitable transparent material may be used for the window or for the entire door. Alternatively, the first and second door 552, 554 may each be made of any other appropriate material which allows it to perform its intended function. That is, any material that enables the first and second door 552, 554 to prevent the passage of a vehicle through the door assembly 500 when the first and/or second door 552, 554 are in a closed position. In general, the first and second doors may be made from the same or different materials and components.

The intermediate space 558 is sized to be able to accommodate a vehicle (not shown in Fig. 5) such as a container-handling vehicle as described above or a service vehicle, such as a manned or robotic service vehicle capable of retrieving a container-handling vehicle. As such, the width (in the Y direction) and the depth (in the X direction) of the intermediate space 558 may generally correspond to the corresponding dimensions of a single robot or service vehicle that enters the intermediate space 558. In general, the width and depth of the intermediate space 558 may be only slightly larger than the corresponding dimensions of the largest vehicle it is designed to accommodate, such that no other object or body is able to enter the intermediate space 558 when a vehicle is contained within the intermediate space 558. For example, the intermediate space may be designed such that the clearance between the largest vehicle and the sides of the intermediate space 558 may be no more than 10mm. In another example, the intermediate space 558 may be designed such that the clearance between the largest vehicle and the sides of the intermediate space may be no more than 50mm. In another example, the intermediate space 558 may be designed such that the clearance between the largest vehicle and the sides of the intermediate space may be no more than 100mm. In another example, the intermediate space 558 may be designed such that the clearance between the largest vehicle and the sides of the intermediate space may be greater than 100mm. The largest vehicle that the intermediate space 558 is designed to accommodate may be a manned service vehicle. The intermediate space 558 may also be designed to accommodate a robotic or manned service vehicle and/or a robotic container handling vehicle 122.

The door assembly 500 is configured to separate a first area (not shown in Fig. 5) from a second area (not shown in Fig. 5) and facilitate the passage of vehicles therebetween. For example, the door assembly 500 may be situated between a service area and a storage grid of an automated storage retrieval system. The first and second door 552, 554 of the door assembly 500 are independently moveable between respective open and closed positions. When the first and/or second door 552, 554 are in an open position, the vehicle is allowed to travel between the first area and the intermediate space and/or between the intermediate space and the second area. When the first and/or second door 552, 554 are in a closed position, passage of the vehicle between the first area and the intermediate space and/or the intermediate space and the second area is prevented. The first area has a first rail system and the second area has a second rail system. To allow vehicles to travel between the first area and the second area, the door assembly 500 has a connecting rail system 556 located in the intermediate space 558 of the door assembly 500. Fig. 5 illustrates the connecting rail system 556 comprising a pair of rails 556A and 556B. The connecting rail system 556 may interface at a first end with a first rail system of a first area and at a second end with a second rail system of a second area, thereby facilitating passage of a vehicle between the two areas. In some embodiments, the connecting rail system 556 may be configured to interface with the first rail system and the second rail system such that the connecting rail system 556 abuts the first rail system at a first end can abuts the second rail system at a second end. In other embodiments, the connecting rail system 556 may be configured to interface with the first rail system and the second rail system such that the connecting rail system 556 is mechanically connected to the first rail system at a first end and/or connected to the second rail system at a second end. The connecting rail system 556 may be connected to the first rail system and/or second rail system via a coupling or an attachment.

### Door assembly - first position

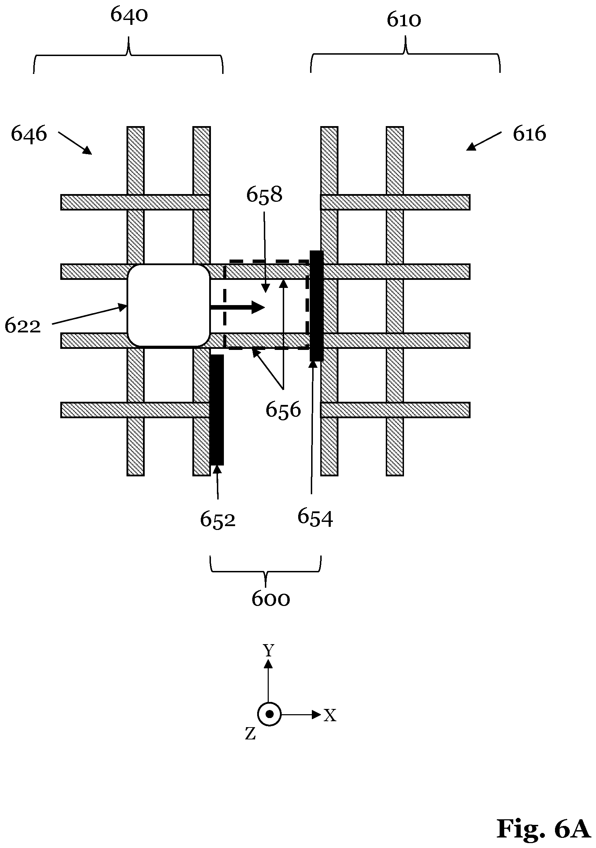

Referring to Fig. 6A, a top view of a door assembly arranged between a first area 640 and a second area 610 of an automated storage retrieval system is shown. The door assembly 600, which may be similar or identical to the door assembly 500 as shown in Fig. 5, comprises a first door 652, a second door 654, and an intermediate space 658. The intermediate space 658 is situated between the first door 652 and the second door 654. The first door 652 and the second door 654 are arranged on opposite sides of the intermediate space 658. In Fig. 6A the grid 100 is in operation, meaning that the door assembly may be configured such that at any given time, at least one of the first door and the second door is closed.

Fig. 6A further shows a first area 640 and a second area 610 which are separated from one another. In the embodiment shown, the first area 640 is a service area as described above. In the embodiment shown, the second area 610 is a grid area as described in reference to Fig. 1. The first area 640 has a first rail system 646. The second area 610 has a second rail system 616. The door assembly 600 includes a connecting rail system 656 which is configured to interface with the first rail system 646 at one end and to the second rail system 616 at the opposite end. In other words, a first end of the connecting rail system 656 interfaces with the first rail system 646 and a second end of the connecting rail system 656 interfaces with the second rail system 616. The first rail system 646, second rail system 616, and connecting rail system 656 are arranged such that the top surfaces of each rail system are flush with one another. That is, the top surface of the first, second, and connecting rail systems 646, 616, 656 are aligned such that any suitable vehicle 622 configured to operate on the first or second rail systems 646, 616 is able to travel between the first area 640 and the second area 610 via the connecting rail system 656.

The door assembly 600 is arranged between the first area 640 and the second area 610, such that the connecting rail system 656 is interfaced between the first rail system 646 and the second rail system 616. The door assembly 600 is so arranged to control the passage of a vehicle 622 over the connecting rail system 656 in between the first area 640 and the second area 610. In more detail, the first door 652 and the second door 654 of the door assembly 600 are configured to be independently moveable between respective open and closed positions. When the grid as described with reference to Fig. 1 is in operation, the first door 652 and the second door 654 can be independently moved such that at least one of the first and second doors 652, 654 is in a closed position at all times.

For example, in Fig. 6A, the first door 652 is in an open position and the second door 654 is in a closed position. Therefore, as shown by the solid arrow in Fig. 6A, the vehicle 622 can travel freely between the first area 640 and the intermediate space 658. However, it is prevented from travelling between the intermediate space 658 and the second area 610. The second door 654 in a closed position obstructs the path between the intermediate space 658 and the second area 610. As such, the vehicle 622 is prevented from moving directly between the first area 640 and the second area 610.

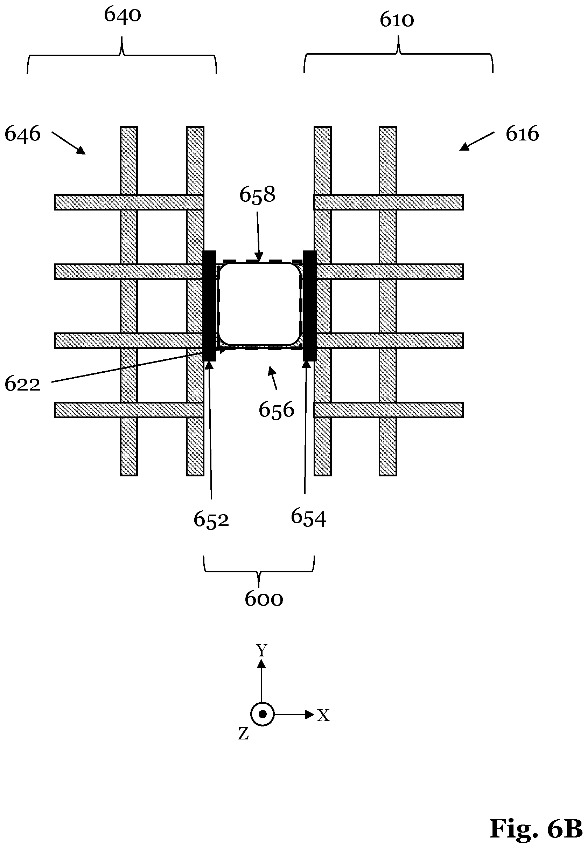

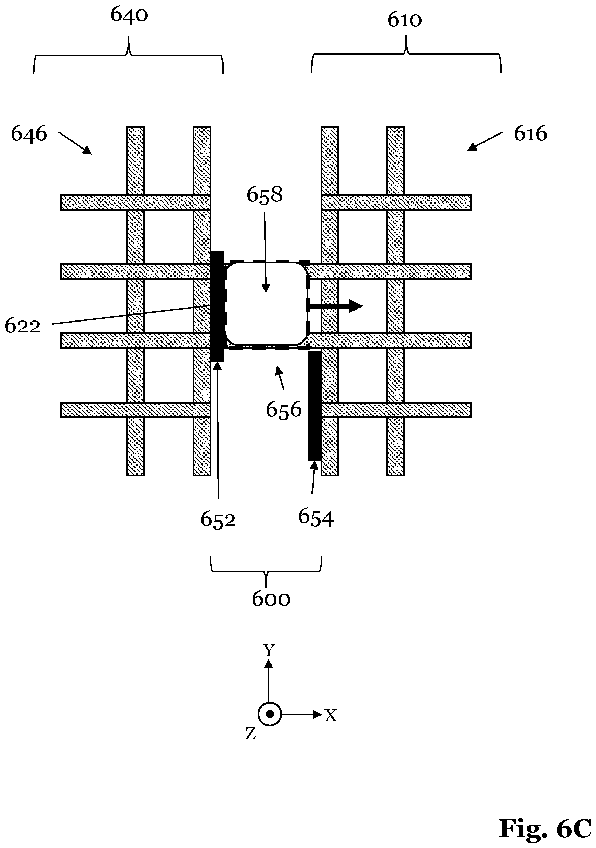

In order for the vehicle 622 to continue its passage from the first area 640 to the second area 610, the second door 654 of the door assembly 600 must move to an open position, which is described in more detail with reference to Fig. 6C. However, in order to maintain a barrier between the first area 640 and the second area 610 at all times, the first door 652 of the door assembly 600 must first move to a closed position, which is described in more detail below with reference to Fig. 6B.

### Door assembly - second position

Referring to Fig. 6B, the door assembly of Fig. 6A is shown in a configuration after the vehicle 622 has travelled between first area 640 and the intermediate area 658. Following this, the first door 652 is moved from an open position to a closed position as shown in Fig. 6B. The first door 652 of the door assembly 500 may be configured to move via any appropriate mechanism, such as the mechanisms described with reference to Fig. 5 above. In Fig. 6B, each of the first door 652 and the second door 654 is in a closed position whilst the vehicle 622 is located in the intermediate area 658. The vehicle 622 is prevented from travelling between the intermediate area 658 and the first area 640, and the intermediate area 658 and the second area 610. The vehicle 622 is stationary when it is located in the intermediate area 658 and when both doors are closed.

In order for the vehicle 622 to continue its passage from the first area 640 to the second are 610, the second door 654 of the door assembly 600 must move to an open position, which is described in more detail below with reference to Fig. 6C.

### Door assembly - third position

Referring to Fig. 6C, the door assembly of Figs. 6A and 6B is shown in a configuration after the first door 652 has moved to a closed position, after which time the second door 654 is moved from a closed position to an open position. As the second door 654 has been moved to an open position, the vehicle 622 can travel freely between the second area 610 and the intermediate space 658 as shown by the solid black arrow in Fig. 6C. The vehicle is prevented from travelling between the intermediate space 658 and the first area 640 since the first door 652 remains in a closed position and obstructs the path between the intermediate space 658 and the first area 640. As such, the vehicle 622 is still prevented from moving directly (i.e., uninhibited) between the first area 640 and the second area 610.

### Door assembly - fourth position

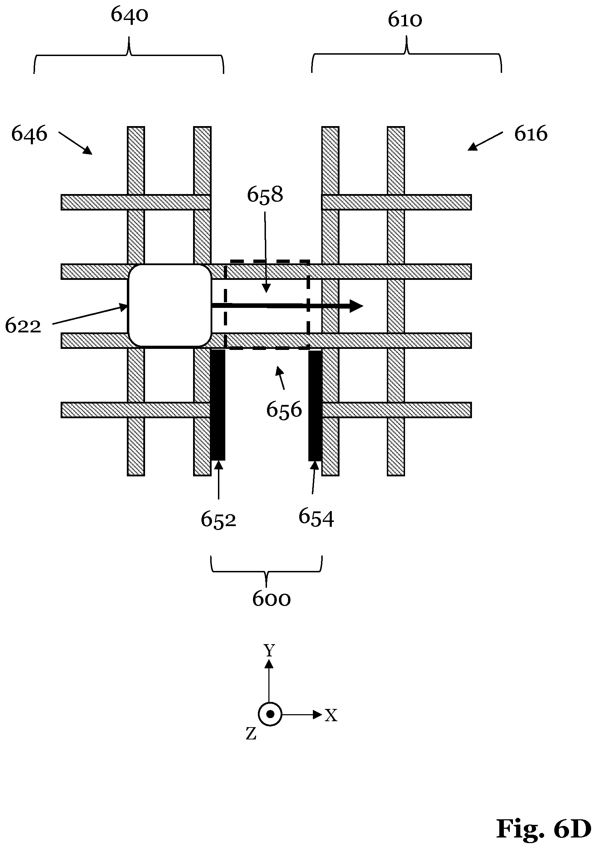

Referring to Fig. 6D, a top view of the door assembly of Figs 6A - 6C is shown in a configuration when the grid is not in operation. When the grid 100 is not in operation, both the first door 652 and the second door 654 are allowed to be in an open position as shown in Fig. 6D. This allows direct passage of the vehicle 622 between the first area 640 and the second area 610 via the connecting rail 656, as shown by the solid arrow in Fig. 6D. That is, the vehicle 622 can travel freely between the first area 640 and the second area 610 without stopping or being inhibited by either of the first or second doors 652, 654.

### Method of operation - first case

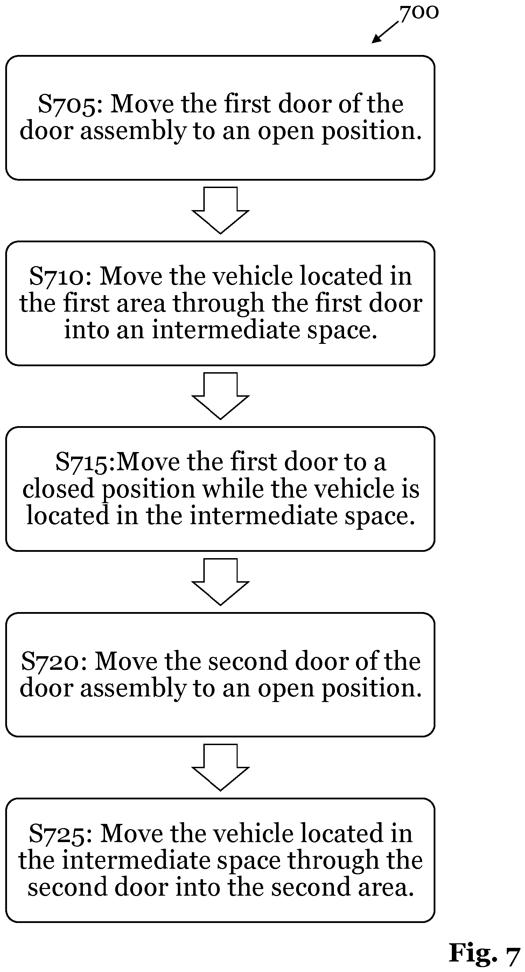

Referring now to Fig. 7, a method 700 for controlling the passage of a vehicle through a door assembly (e.g. the door assembly 600 as described above) when the grid is in operation is shown. In particular, the method 700 is a method for controlling the passage of a vehicle moving from the first area to the second area via the door assembly. The method may be carried out using one or more processing or control systems, such as described in reference to Fig. 4. The control system may be operably connected the door assembly such that the independent movement of the first and second doors can be controlled. That is, the first and second doors can be moved between respective open and closed positions under the control of a central control system. The control system may be configured to receive signals indicating the position of the first and second doors. The control system may further be configured to receive signals indicating the position of a vehicle. For example, the control system may be configured to receive a signal indicating that the vehicle is fully accommodated by the intermediate space of the door assembly. For example, the control system may be configured to receive a signal indicating that the vehicle is located directly outside the first or second door of the door assembly. The control system may be configured to receive a signal indicating that the grid of the automated storage retrieval system is in operation.

The method 700 comprises a first step 705 of moving the first door of the door assembly from a closed position to an open position. The door assembly may be configured such that the first step 705 may only be carried out when the control system receives a signal indicating that the grid is in operation, or a signal indicating that a vehicle needs to travel from the first area to the second area. Moving the first door to an open position may involve determining, whether the first door is already in an open position. Moving the first door to an open position may also involve determining, whether the second door is in a closed position. When the grid is in operation, at least one of the first and second door must be in a closed position at all times. The first door can only be moved to an open position when the second door is in a closed position. If this condition is met, and the first door is determined to be in a closed position or any other intermediate position between an open position and a closed position, the step 705 may involve controlling a drive system connected to the first door which causes the first door to move to an open position.

After step 705, the method 700 moves to step 710, in which the vehicle located in the first area is moved through the first door into the intermediate space. Step 710 may include confirming, for example using a control system, that the previous step (that is, step 705) is complete prior to executing step 710. For example, the control system may receive a signal indicating that the first door is open, which may be triggered by a sensor or actuator that is actuated by the first door when it reaches the open position. Step 710 is carried out while the first door remains in an open position and the second door remains in a closed position. Moving the vehicle to the intermediate space from the first area may involve controlling onboard motors on the vehicle to drive wheels of the vehicle to cause it to move along the connecting rail system into the intermediate space.

After step 710, the method 700 moves to step 715, in which the first door is moved to a closed position while the vehicle is located in the intermediate space. Step 715 may include confirming, for example using a control system, that the previous step (that is, step 710) is complete prior to step 715 taking place. Similar to step 705, moving the first door to a closed position may involve controlling a drive system connected to the door assembly which causes the first door to move to a closed position. Step 715 is carried out while the second door remains in a closed position. Step 715 may include confirming that the vehicle is fully accommodated by the intermediate space before the first door is caused to move to the closed position. This may be done using a sensor configured to identify the position of a vehicle within the intermediate space. Alternatively, a human operator may indicate that the vehicle is fully accommodated by the intermediate space by, for example, pressing a button located inside the intermediate space or within the first area. The human operator may be onboard a manned service vehicle situated in the intermediate space, or remotely controlling a vehicle.

After step 715, the method 700 moves to step 720, in which the second door moves from a closed position to an open position. Step 720 may include confirming, for example using a control system, that the previous step (that is, step 715) is complete prior to executing step 720. Moving the second door to an open position may involve determining, using a control system, whether the first door is in a closed position. When the grid is in operation, at least one of the first or second door must be in a closed position at all times. The second door can only be moved to an open position when the first door is in a closed position. Thus, step 720 may involve confirming, prior to moving the second door, that the first door is closed, for example by receiving a signal from a sensor or actuator indicating the first door is closed. If this condition is met, the step 720 may involve controlling a drive system connected to the second door which causes the second door to move to an open position.

After step 720, the method 700 moves to step 725, in which the vehicle located in the intermediate space is moved through the second door into the second area. Step 725 may include confirming, for example using a control system, that the previous step (that is, step 720) is complete prior to executing step 725. For example, the control system may receive a signal indicating that the second door is open, which may be triggered by a sensor or actuator that is actuated by the second door when it reaches the open position. Step 710 is carried out while the first door remains in a closed position and the second door remains in an open position. Moving the vehicle to the second area from the intermediate space may involve controlling, using a control system, onboard motors on the vehicle to drive wheels of the vehicle to cause it to move along the connecting rail system into the second area.

The method 700 may be performed such that the vehicle moves from the second area to the first area. That is, the method be performed in reverse such that it comprises the steps of: moving the second door of the door assembly from a closed position to an open position; moving the vehicle located in the second area through the second door into an intermediate space; moving the second door from an open position to a closed position; moving the first door from a closed position to an open position; and moving the vehicle located in the intermediate space through the first door into the first area.

### Method of operation - second case

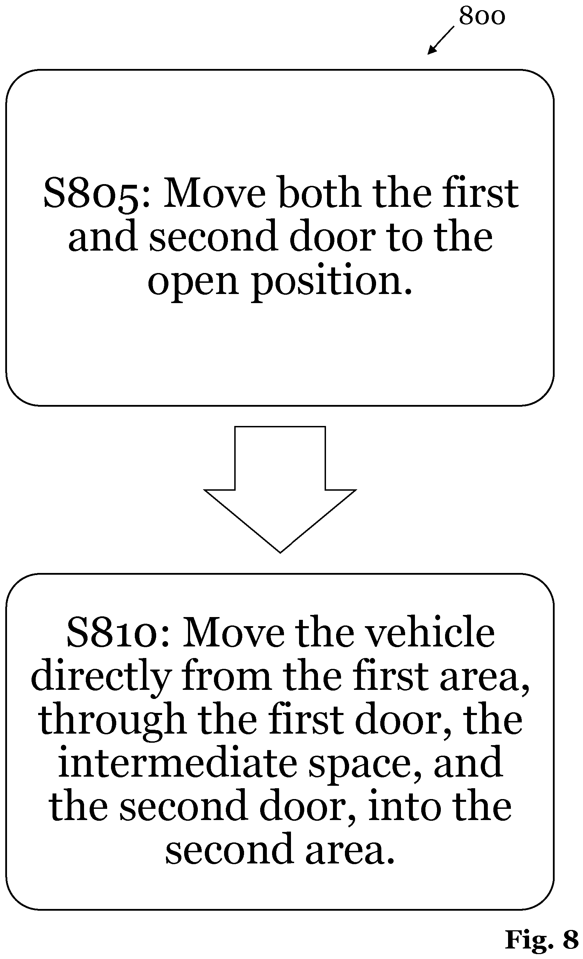

Referring now to Fig. 8, a method 800 for controlling the passage of a vehicle through a system (e.g. the system 600 as described above) when the grid is not in operation is shown. The method 800 may be carried out using a processing or control system, as described in detail above. The control system may be configured to receive a signal indicating that the grid of the automated storage retrieval system is not in operation.

The method 800 comprises a first step 805 of moving both the first door and the second door of the door assembly to an open position. The door assembly may be configured such that the first step 805 may only be carried out when the control system receives a signal indicating that the grid is not in operation. Moving the first and second door to an open position may involve determining, using a control system, whether each of the first and second door is already in an open position. When the grid is not in operation, both of the first and second door can be in an open position at the same time. The step 705 may involve controlling a drive system connected to the door assembly which causes each of the first and second door to move to an open position.

After step 805, the method 800 moves to step 810, in which the vehicle located in the first area moves directly from the first area, through the intermediate space, into the second area. That is, the vehicle can travel freely between the first area and the second area without obstruction from either the first door or the second door of the door assembly. Step 810 may include confirming, for example using a control system, that the previous step (that is, step 805) is complete. Step 810 is carried out while the first and second door remain in an open position. Moving the vehicle directly from the first area to the second area may involve controlling, using a control system, onboard motors on the vehicle to drive wheels of the vehicle to cause it to move along the connecting rail system into the second area. The method 800 may also be performed such that the vehicle moves directly from the second area to the first area.

### Penultimate comments

The door assembly disclosed herein can be used in conjunction more generally with a vehicle of any size. For example, a door assembly may be configured to accommodate a cantilever-type robotic container-handling vehicle that spans two grid cells, or any other type of robotic container-handling vehicle that spans one or more cells of the grid. A door assembly may further be configured to accommodate a manned service vehicle, or any other type of service vehicle that spans one or more cells of the grid. It would be appreciated that the dimensions of the components of the door assembly, in particular the intermediate space and first and second doors, can be adapted according to the size of the vehicle that the door assembly is configured to control the passage of. In other words, aspects and embodiments of the present disclosure are not limited to one particular type of robot or service vehicle, but may be used with any shape or size vehicle, with the dimensions of the door assembly and system as a whole adjusted accordingly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A door assembly for controlling passage of a vehicle between a first area and a second area of an automated storage and retrieval system, the first area having a first rail system and the second area having a second rail system, wherein the door assembly comprises:
a first door;
a second door; and
an intermediate space for accommodating the vehicle, the intermediate space comprising a connecting rail system configured to interface at a first end with the first rail system and at a second end with the second rail system,
wherein the intermediate space is situated between the first door and the second door, and
wherein the first and second door are independently moveable between respective closed and open positions.

2. The door assembly of claim 1, wherein the first door is configured such that passage of a vehicle between the first area and the intermediate space is permitted when the first door is in an open position, and passage of a vehicle between the first area and the intermediate space is prevented when the first door is in a closed position, and wherein the second door is configured such that passage of a vehicle between the second area and the intermediate space is permitted when the second door is in an open position, and passage of a vehicle between the second area and the intermediate space is prevented when the second door is in a closed position.

3. The door assembly of claim 1 or 2, wherein the first door and the second door slide horizontally between an open position which permits passage of the vehicle and a closed position which prevents passage of the vehicle.

4. The door assembly of claim 1 or 2, wherein the first door and the second door slide vertically between an open position which permits passage of the vehicle and a closed position which prevents passage of the vehicle.

5. The door assembly of any preceding claim, wherein the first door and the second door are each configured to pivot about a respective pivot axis to move between open and closed positions.

6. The door assembly of any preceding claim, wherein the first area is a service area, and the second area is a storage grid.

7. The door assembly of claim 6, wherein when in a closed position, the first door separates the service area from the intermediate space, and when in a closed position, the second door separates the grid storage system from the intermediate space.

8. The door assembly of any preceding claim, the door assembly is configured such that when the grid storage system is in operation, at least one of the first door and the second door are in a closed position such that direct passage between the first area and the second area is prevented.

9. The door assembly of any preceding claim, the door assembly is configured such that when the grid storage system is not in operation, both the first door and the second door are allowed to be in an open position to allow direct passage between the first area and the second area.

10. An automated storage and retrieval system comprising:
a first area comprising a first rail system;
a second area comprising a second rail system; and
the door assembly of any preceding claim, wherein the door assembly is situated between the first area and the second area such that the first end of the connecting rail system interfaces with the first rail system and the second end of the connecting rail system interfaces with the second rail system.

11. The automated storage and retrieval system of claim 10, wherein a top surface of the first rail system, second rail system, and connecting rail system are flush with one another.

12. The automated storage and retrieval system of claim 10 or 11, further comprising a vehicle configured to operate on the first and second rail systems and configured to travel via the door assembly between the first and second areas, wherein the vehicle is a robotic container-handling vehicle or a service vehicle.

13. A method for controlling passage of a vehicle from a first area of an automated storage and retrieval system to a second area of the automated storage and retrieval system using the door assembly of any preceding claim, wherein the method comprises:
causing a first door of the door assembly to move to an open position;
causing the vehicle to move from the first area to the intermediate space;
causing the first door to move to a closed position while the vehicle is located in the intermediate space;
causing a second door to move to an open position; and
causing the vehicle to move from the intermediate space to the second area.

14. The method of claim 13, wherein the method further comprises:
determining that the vehicle is located in the intermediate space; and
causing the first door of the door assembly to move to a closed position in response to determining that the vehicle is located in the intermediate space.

15. A method for controlling passage of a vehicle from a first area of an automated storage and retrieval system to a second area of the automated storage and retrieval system using the door assembly of any of claims 1 to 12, wherein the method comprises the steps of:
determining that operations of the automated storage and retrieval system have ceased;
in response to determining that operations of the automated storage and retrieval system have ceased, causing the first and second door to both move to an open position; and
causing the vehicle to move directly from the first area, through the intermediate space, to the second area.
